# EUROPEAN PATENT APPLICATION

(11) **EP 4 485 105 A1**
(43) Date of publication of application: **01.01.2025**
(21) Application number: 24183277.3
(22) Date of filing: 20.06.2024
(51) Int. Cl.: G05B 19/418, B32B 38/00

(54) **SYSTEM AND METHOD FOR MONITORING DEFECTS OF INDUSTRIALLY-PROCESSED PANEL EDGES AND CORRESPONDING INDUSTRIAL-PROCESSING MACHINE TOOL**

(30) Priority: 28.06.2023 IT 202300013398
(71) Applicant: BIESSE S.p.A., 61122 Pesaro (IT)
(72) Inventor: BEZZICCHERI, Matteo, 61122 Pesaro (IT); PAONE, Nicola, 61122 Pesaro (IT)
(74) Representative: Studio Torta S.p.A.

(57) **Abstract**

A system (10) for monitoring defects of edges (2) of panels (1) obtained by industrial processing by means of a machine tool (20) is provided with: a measuring device (12), which performs a dimensional measurement of an edge-panel system (14), formed by a panel (1) on which an edge (2) has been applied to close a lateral surface thereof; a control unit (16), operatively coupled to the measuring device (12) and receiving dimensional measurement data from the measuring device (12) and processing said dimensional measurement data to determine information concerning defects associated with the edge-panel system (14). The control unit (16) provides the processed information concerning the defects associated with the edge-panel system (14) to the machine tool (20), in order to optimize, according to these information, processing parameters of the panels (1) and of the respective edges (2) and thus reduce processing errors.

## Description

### CROSS-REFERENCE TO RELATED APPLICATIONS

This patent application claims priority from Italian patent application no. 102023000013398 filed on June 28, 2023, the entire disclosure of which is incorporated herein by reference.

### TECHNICAL FIELD

This solution relates to a system and a method for monitoring defects of industrially-processed panel edges and to a corresponding industrial-processing machine tool.

### BACKGROUND

As is known, techniques for industrial processing of panels, for example made of wood, plastic or other types of material, can entail so-called final "edging" stages.

In particular, the edging process comprises operations aimed at coating/ennobling the lateral surfaces of the panels and is carried out, on an industrial level, with automatic or semi-automatic machine tools, called edgebanding machines, by applying edges made of various types of materials (for example plastic, wood, cellulose, metal), which are generally glued with hot-melt adhesives.

The edging can comprise, for example, the following operations (of known type and not described in detail herein): grinding of the panel; application of the glue and heating of the edge; application of the edge; heading; rough-milling; smoothing/trimming; scraping of the edge and of the glue; brushing; dressing.

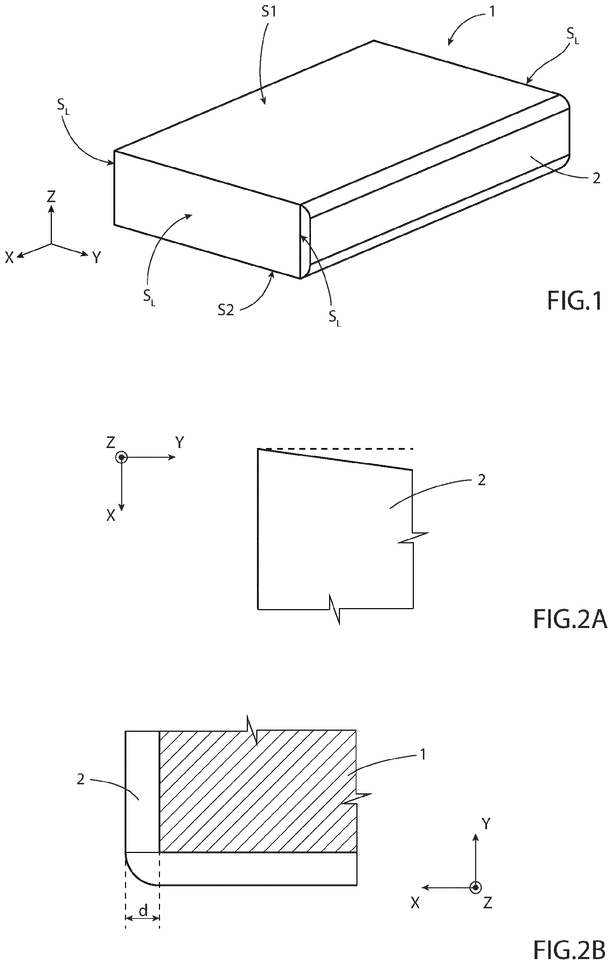

To this regard, Figure 1 shows a panel 1, for example a wooden panel, having a first and a second main extension surface S₁, S₂ (in a horizontal plane xy in the reference system indicated in Figure 1) and lateral surfaces S_{L}, which laterally delimit the panel 1 (in particular, two longitudinal surfaces, in the plane xz, and two transverse surfaces, in the plane yz of the reference system of Figure 1) .

In the example shown herein, the panel 1 is provided with an edge 2, having been applied, by means of the aforementioned edging operations, to one of the longitudinal surfaces, to coat/ennoble the appearance of the respective lateral surface.

It is known that the panels resulting from the aforementioned edging operations may feature "edging defects", i.e. anomalies present on the edged panel with respect to an expected result.

Such edging defects may include, for example, one or more of the following errors: parallelism errors; linearity errors; radius errors; squaring errors; shaping errors; splintering; orange peel; slivers; thickness errors; heading errors; excess errors, etc.

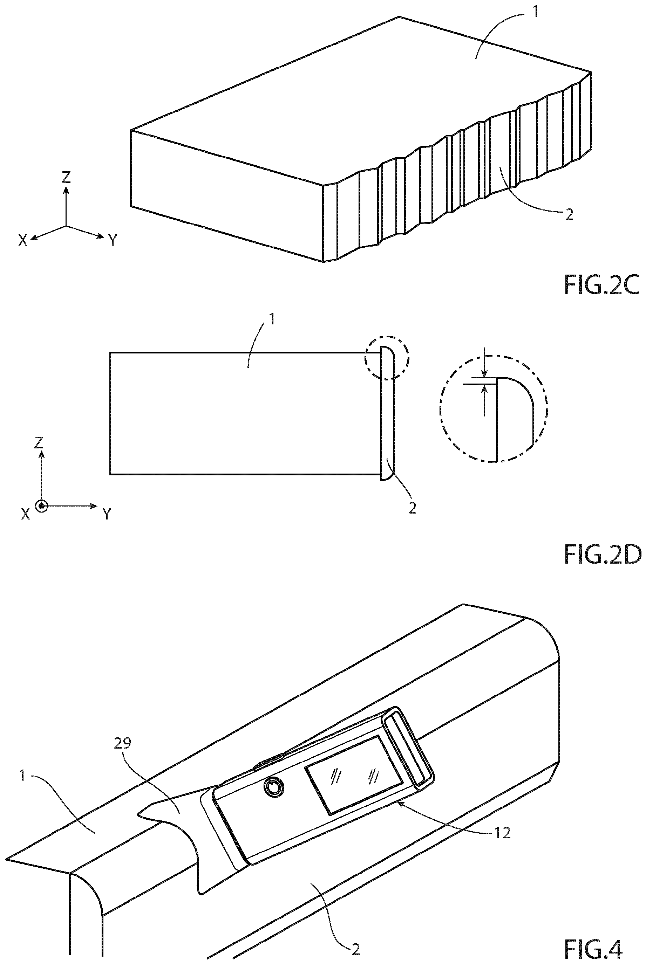

By mere way of example, Figure 2A shows a panel, again indicated with number 1, which has a squaring error in the plane yz; Figure 2B shows a panel 1 with a radius error in the plane xy; Figure 2C shows a panel 1 with shaping defects; Figure 2D shows a panel 1 with excess defects in the plane yz.

Due to the presence of one or more of these defects, the panels may not meet both aesthetic specifications (for example, from the point of view of pleasantness to the eye or touch) and functional specifications (for example, with regard to the ability of the edge to effectively adhere to the panel). Generally speaking, a properly applied edge makes the panel mechanically more resistant over time, when subjected to external agents such as humidity and operating temperatures.

To date, verification of these defects is generally entrusted to a visual evaluation carried out by specialised operators, hence based on experience and has a qualitative nature.

Some automatic solutions have also been proposed, which entail the verification, by means of optical systems based on image processing, of the presence or absence of the edge and/or of some characteristics of the edge (for example, in terms of its thickness). However, these automatic solutions do not allow operators to obtain indications on possible edge defects and, moreover, since they are based on image processing, they are rather complex.

Therefore, the need is felt in the field for an automated solution, being effective and simple to be implemented, for detection of panel edge defects.

### SUMMARY

The object of this solution is to at least partly solve the problems discussed above and to fulfil the aforementioned need.

Hence, according to this solution, a system and method for monitoring panel edge defects are provided, as well as a corresponding industrial-processing machine tool, as defined in the appended claims.

### BRIEF DESCRIPTION OF THE DRAWINGS

The invention will be best understood with reference to the following detailed description of a preferred embodiment, which is provided by way of example and is not limiting, with reference to the accompanying drawings, in which:
- Figure 1 schematically shows a panel having an edge applied to a lateral surface thereof;
- Figures 2a-2d schematically show possible edge defects, to which the panel may be subject due to processing errors;

- Figure 3 is a block diagram of a panel edge defect monitoring system according to a possible embodiment of the invention;
- Figure 4 schematically shows a solution for coupling a measuring device to a panel in the system of Figure 3;
- Figure 5 is a block diagram of a possible implementation of the measuring device;
- Figure 6 shows a further implementation of the measuring device;
- Figures 7-9 show flowcharts concerning defect monitoring operations carried out in the system of Figure 3;
- Figures 10-12 show further embodiments of the defect monitoring system, according to this solution; and
- Figure 13 shows the use of a reference profile sample, according to a further aspect of this solution.

### DESCRIPTION OF EMBODIMENTS

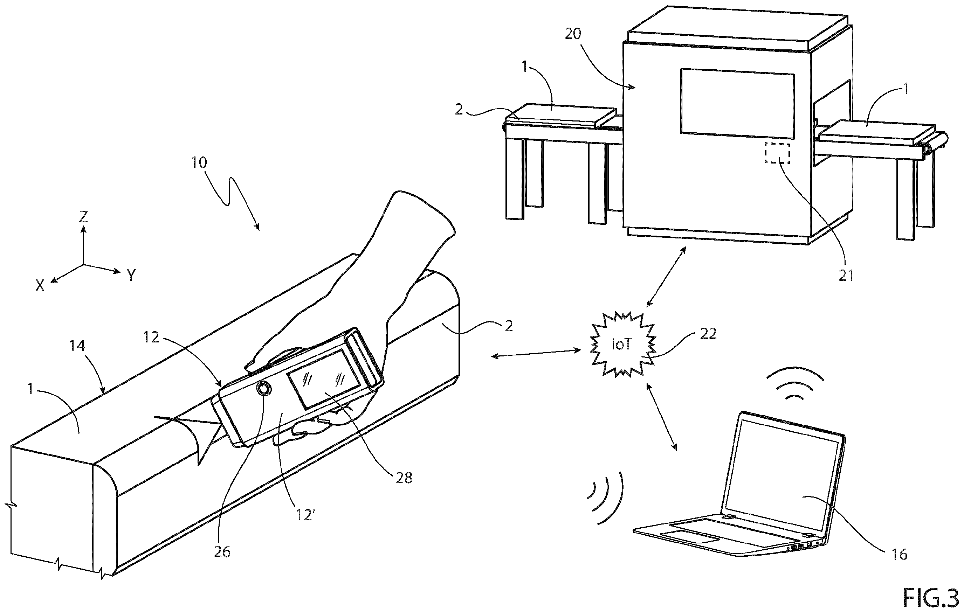

As schematically shown in Figure 3, a panel edge defect monitoring system, indicated in general with 10, comprises a measuring device 12, configured to perform a dimensional measurement of a section of an edge-panel system, wherein the edge-panel system, indicated with 14, is the assembly consisting of a portion of a panel, indicated again with 1, and of an edge, indicated again with 2, applied on said portion, as a closing element of a corresponding lateral surface of the panel 1, applied by means of an edging process.

In particular, the measuring device 12 can be configured to perform a detection of the three-dimensional pattern of the outer surface of the edge-panel system 14.

In a possible embodiment, the measuring device 12 is configured to perform a profile measurement, for detecting a profile of the section of the edge-panel system 14.

In the example shown herein, the measuring device 12 is made in a casing 12', of a portable type, being operable by a user to perform the aforementioned dimensional/profile measurement. However, as also pointed out hereinafter, different ways of implementing the same measuring device 12 can be envisaged.

In the embodiment shown herein, the profile measured by the measuring device 12 corresponds to a section of the edge-panel system 14 in the plane yz (in the example, transverse to the longitudinal extension of the panel 1); however, it is underlined that the same measuring device 12 can be operated to measure different profiles, relating to different sections of the edge-panel system 14.

The monitoring system 10 further comprises a control unit 16, operatively coupled to the measuring device 12 and configured to receive dimensional measurement data from the measuring device 12, in particular data associated with the aforesaid profile, deriving from the measurements carried out, and to process said dimensional measurement data to determine information concerning the presence of defects associated with the aforesaid edge-panel system 14.

In particular, the control unit 16 is configured to determine defect indicators or indices, which characterize the measured profile of the edge-panel system 14.

Similarly to what disclosed above, these defect indicators can, for example, be associated with (without being limited to the following list): parallelism errors; linearity errors; radius errors; squaring errors; shaping errors; splintering; orange peel; slivers; thickness errors; heading errors; excess errors, etc.

According to an aspect of this solution, as schematically shown in the aforesaid Figure 3, the control unit 16 is configured to provide, for example through wireless communication, the processed information concerning the presence of defects associated with the aforesaid edge-panel system 14 (for example, the aforesaid defect indicators) to a machine tool 20, for example a numerical control machine, which performed the edging operations for the manufacturing of the edge 2.

This machine tool 20 can thus optimize, based on the same information (used as a feedback), processing parameters for processing of the panels 1 and the corresponding edges 2, in order to reduce processing errors and processing waste and/or non-compliant products.

According to an aspect of this solution, the machine tool 20, provided - in a known manner - with a respective controller 21 (for example a PLC, Programmable Logic Controller), will also be able to determine, based on the aforementioned information concerning the presence of defects associated with the edge-panel system 14, solutions for ordinary or extraordinary maintenance of the same machine tool 20.

In a known manner, which is not disclosed in detail herein, the machine tool 20, in particular designed for processing of wood panels, may, for example, comprise an oblong base provided with longitudinal guide members parallel to a first, substantially horizontal, direction; a plurality of cross members mounted between the longitudinal guide members parallel to a second, substantially horizontal, direction, which is transverse to the first direction; and at least one support block mounted on each cross member to hold at least one panel (not shown herein). The processing machine 20 is further provided with an overhead crane, which is movable along the base in the first direction, extends above the base in the second direction and normally supports at least one processing head provided with a tool (not shown herein) for processing of the panels (for example, to perform the aforementioned edging operation).

The control unit 16 (or the machine tool 20, through the respective controller 21) will also be able to carry out, based on the same information concerning the presence of defects of the edge-panel system 14, assessments regarding the quality of the semi-finished products used, including for example: the edge 2, the panel 1, the glue used, again in order to reduce processing errors and processing waste and/or non-compliant products.

It is underlined that, regardless of the embodiment shown herein, in which the control unit 16 is implemented by means of a processing unit separate from the measuring device 12 and from the machine tool 20, the same control unit 16 could alternatively be realized within the measuring device 12, in an integrated manner; or it could be part of the controller 21 of the machine tool 20; or still it could be realized remotely, for example by means of a cloud server.

According to a further aspect of this solution, the measuring device 12, the aforesaid control unit 16 and the machine tool 20 (and the respective controller 21) can be part of an IoT (Internet of Things) platform or network, schematically indicated with 22, comprising for example a cloud storage unit, for implementing a two-way communication and storage of the information concerning the monitoring operations (including the aforesaid information concerning the presence of defects, the aforesaid assessments about the quality of the products used, the aforesaid determinations of ordinary or extraordinary maintenance). In this way, it is possible to create and increase over time a shared know-how about the understanding of edge processing defects and of the solutions to reduce/avoid the same defects.

For example, this IoT network 22 may create relationships between the defect indicators and/or the machine parameters and/or the processing conditions (in terms of machine type, machine operator, environmental conditions, edge type, panel type, tool type, processing parameters) through "data analytics" techniques. These relationships can, for example (but not limitedly to this example), be useful to an operator to keep the production process under control, to suggest optimal processing conditions to the machine tool 20 upon first set-up, if these have occurred in the past based on previous experiences (heuristic knowledge); and also to a manufacturer of the machine tool 20 to classify the performances of its machine fleet.

As shown in the aforementioned Figure 3, the measuring device 12 can be provided with a starting element 26, for example in the form of a turn-on button, configured so as to start the operation of the measuring device 12.

In particular, according to an aspect of this solution, the measuring device 12 (or the aforementioned control unit 16) can be configured, after operations have started, to verify the presence and compliance with predetermined measurement conditions, for example in relation to a correct positioning of the measuring device 12 with respect to the object under analysis (the aforementioned edge-panel system 14).

To this aim, the measuring device 12 can, for example, be provided with a position sensor (not shown), in order to determine a position with respect to the edge-panel system 14; and compliance with the measuring conditions can be determined if the position measured by the position sensor fulfils a given condition, for example is lower than a given threshold.

Furthermore, as shown in Figure 3, the measuring device 12 can be provided with a user interface, HMI (Human Machine Interface) 28, provided with input elements, for example buttons or keys, and with a display, which can be configured to provide an indication (for example, a visual or audible indication) as to whether the aforesaid measuring conditions are respected.

The measuring device 12 (or the aforementioned control unit 16) can be configured to determine the activation of the measurement functions concerning the surface to be detected and subsequent provision of the measurement data to the controller 21 of the machine tool 20, only if compliance with the aforesaid measurement conditions is determined.

In the embodiment shown in the aforementioned Figure 3, the measuring device 12 performs a contactless measurement, at a certain distance from the edge-panel system 14.

In an alternative embodiment, shown in Figure 4, the aforementioned measuring device 12 is instead configured to perform a measurement in contact with the aforementioned edge-panel system 14.

In particular, in this embodiment, the measuring device 12 comprises a coupling element 29, which can properly be shaped or made so as to be coupled to the outer profile of the edge-panel system 14, for carrying out the dimensional measurements. This coupling element 29 can therefore facilitate the alignment of the measuring device 12 with the edge-panel system 14 and, hence, the correct positioning of the measuring device 12 for the execution of the dimensional/profile measurements.

In general, the aforementioned measuring device 12 can entail the use of various types of surface/profile measuring systems, for example (but not limited to the following list):
laser triangulation systems;
laser line triangulation systems;
structured light lighting systems;
surface detection technologies with contact sensors;
systems based on laser or LED emitters and sensors in the visible, ultraviolet or infrared spectrum;
systems exploiting other bands of the electromagnetic spectrum, such as, for example, tomographs;
systems exploiting mechanical waves, such as, for example, ultrasound defect detectors.

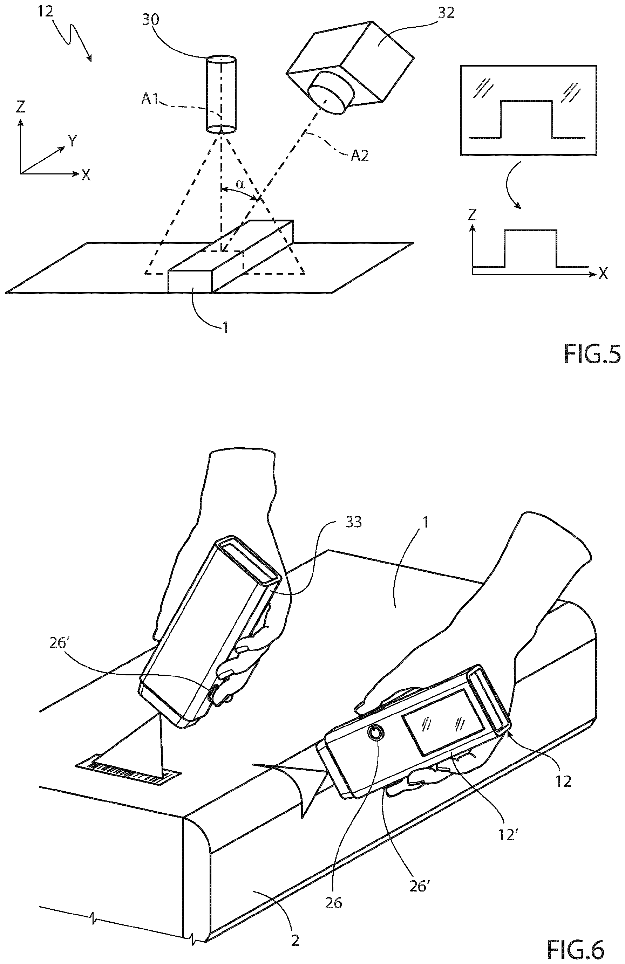

A possible embodiment for the measuring device 12, shown in Figure 5, is based on a laser line triangulation system.

The measuring device 12 comprises, in this case: a laser line projector 30, having a first optical axis A1; and a camera 32 with a second optical axis A2, inclined at a given angle α with respect to the first optical axis A1 of the projector 30.

The control unit 16 associated with the measuring device 12 is, in this case, configured to process the image acquired by the camera 32 and extract the profile of the section (in the example, in the plane yz) of the edge-panel system 14 illuminated by the laser line.

The measuring device 12 and/or the control unit 16 may further comprise an interface configured to receive characteristics of the panel 2 to be investigated. These characteristics may be, for example and without be exhaustive:
used for optimization of the measurement parameters of the measuring device 12 and thus, for example, of a signal-to-noise ratio of the measured data;
used by the control unit 16 to contribute to definition of the defects and to optimization of the processing parameters of the numerical control machine 20.

As schematically shown in Figure 6, the measuring device 12 may comprise a barcode or QR code reader for this purpose, so as to read an identification code present on the edge-panel system 14 and automatically acquire, for example upon pressing of a dedicated button 26', the aforementioned characteristics of the panel 2, appropriately encoded in the code.

Alternatively, as indicated in Figure 6, the monitoring system 10 may comprise a separate apparatus 33 for reading the aforementioned barcode and/or QR code (or the like), suitably coupled to the measuring device 12 and/or to the control unit 16, so as to provide the information requested for optimization of the measurement of the measuring device 12 and/or of the implementation of the algorithms for determining the defect indicators by the control unit 16.

The aforementioned control unit 16 can therefore comprise a first interface for receiving the measurement data sent by the measuring device 12; and also a second interface for receiving the characteristics of the panel 2 to be investigated (and/or of the machine tool 20).

As indicated above, in case the aforesaid characteristics are read by the measuring device 12 (for example, by reading a barcode, QR code or the like), the two interfaces may coincide.

Alternatively, the aforementioned second interface can be configured to receive the characteristics of the panel 2 from an operator, who can directly interact with the aforementioned control unit 16 or with the controller 21 of the machine tool 20. The operator can also define tolerances of acceptability of the defects that can characterize the edging process, depending on the performances of the machine tool 20.

More in detail, the control unit 16 may further comprise:
a stage for calculating the defect indicators that characterize the process under analysis, based on the measurement data and on the characteristics of panel 2, by means of traditional algorithms (based on predefined calculations and relationships) and/or by means of artificial intelligence techniques;
a stage for automatically redefining the processing parameters of the machine tool 20 based on the determined defect indicators, again by means of traditional algorithms (based on predefined calculations and relationships) and/or by means of artificial intelligence techniques;
a stage for defining ordinary or extraordinary maintenance operations that can be requested for the machine tool 20, again based on the aforementioned defect indicators and/or one the aforementioned characteristics, by means of traditional algorithms (based on predefined calculations and relationships) and/or by means of artificial intelligence techniques;
a stage for estimating the quality of semi-finished products used for the processing of the edge-panel system 14, including - but not limited to - the edge 2, the panel 1, the glue used for the coupling between the edge 2 and the panel 1, again by means of traditional algorithms (based on predefined calculations and relationships) and/or by means of artificial intelligence techniques;
a stage for determining the relationships between the defect indicators and/or the machine parameters and/or the processing conditions (in terms of machine type, machine operator, environmental conditions, edge type, panel type, tool type, processing parameters), by means of traditional algorithms (based on predefined calculations and relationships) and/or by means of artificial intelligence techniques. These relationships may, for example (but not limited to this example), be useful to the operator to keep the production process under control or to suggest to the machine tool 20 optimal processing conditions upon the first set-up.

The control unit 16 may further comprise a first output interface, configured to be coupled to and communicate with the controller 21 of the machine tool 20, for the transfer of the new configuration and processing parameters to the machine tool 20; and, furthermore, a second output interface, forming part of a human-machine interface (comprising at least one displaying element or display), where the results of the processing can be shown, including the aforementioned indicators describing the defects of the edging process, requests of maintenance for the machine tool 20, assessments on the quality of the semi-finished products.

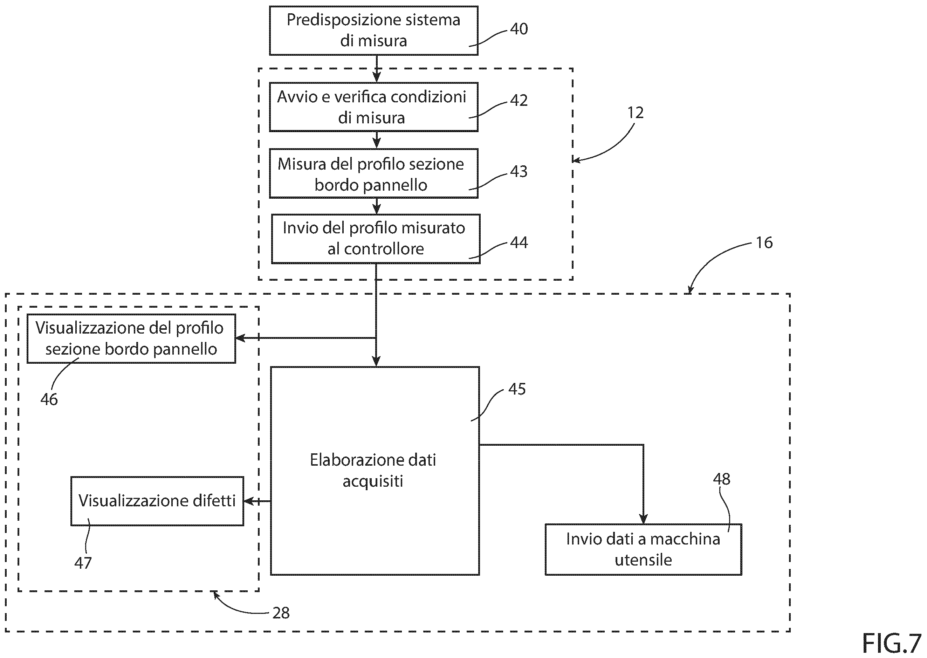

With reference to Figure 7, a brief description is provided of a procedure for monitoring edging defects, which entails the detection of such defects by the measuring device 12 and the feedback of the information relating to the detected defects to the machine tool 20.

This procedure comprises, step 40, the preparation of the measuring device 12 and, for example, the appropriate positioning of the measuring device 12 with respect to the edge-panel system 14.

The measuring device 12 is then started, step 42, for example by means of the corresponding starting element 26 (or, alternatively, by means of an external trigger, received for example from the controller 21 of the machine tool 20).

The procedure can then entail the definition of the characteristics of the panel 2 to be investigated (and/or of the machine tool 20), for example by means of the aforementioned reading of barcode and/or QR code information by means of the measuring device 12 or by means of the separate apparatus 33. These characteristics can also be sent to the control unit 16.

The measuring device 12 can then verify the existence of the measuring conditions and, only in the case of a positive outcome, start the procedure for measuring the dimensional characteristics of the panel 2, step 43.

In particular, as discussed above, the measuring device can measure the profile of a section of the edge-panel system 14.

The measurement data is then sent, step 44, to the control unit 16, which automatically processes the acquired data, step 45, in order to determine the information concerning the defects of the edging process, including, in particular, the defect indications (or indices).

As shown in step 46, the profile of the section of the edge-panel system 14 can be displayed by means of the user interface 28.

Furthermore, for example by means of the user interface 28, the information concerning the defects can be provided to a user, through visual feedback or feedback of other nature, as shown in step 47. For example, indications can be provided about the nature and acceptability of the processed defects; in case of defect indices that do not guarantee the requested tolerances of acceptability, the control unit 16 can, for example, suggest an automatic redefinition of the processing parameters and/or the execution of maintenance for the machine tool 20.

In particular, as shown in step 48, the control unit 16 can provide the controller 21 of the machine tool 20 with information concerning the detected defects, in order, for example, to modify processing parameters implemented by the same machine tool 20. The control unit 16, if required, can directly provide the controller 21 of the machine tool 20 with configuration/processing parameters properly modified according to the detected defects.

It is underlined that the automatic processing of the measurement data by the control unit 16 (in the aforementioned step 45) can entail the application of traditional algorithms, namely based on the determination of output data by means of predetermined relationships with the input data; or of artificial intelligence algorithms, for example based on decision trees or neural networks.

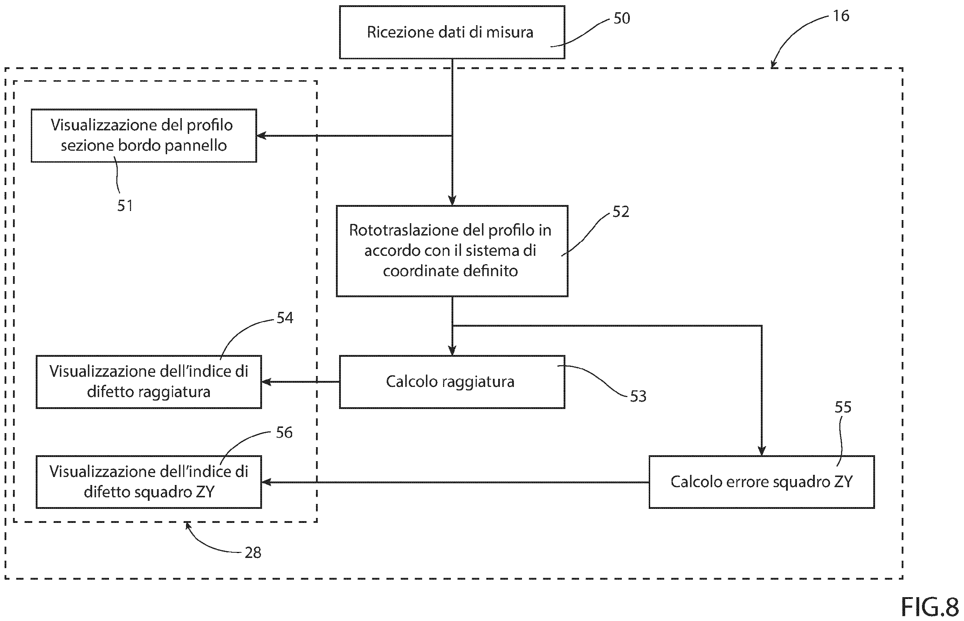

By mere way of example, Figure 8 shows a possible algorithm (of a traditional type, namely not based on artificial intelligence) that can be implemented by the aforementioned stage for calculating the defect indicators to calculate a "radius" defect indicator; and also a "square" defect indicator in the plane yz.

This algorithm entails receiving the measurement data, step 50, in particular the aforementioned profile of the section of the edge-panel system 14, detected by the measuring device 12; this profile can also be displayed by the control unit 16 through the corresponding user interface 28, as shown in step 51.

Then, a step, denoted with 52, is carried out involving the rotation-translation of the profile in accordance with a predefined coordinate system.

After that, step 53, by means of a first system of mathematical/geometric relationships, which is not described in detail herein, a first defect index, in the example a radius index, can be calculated.

This first defect index can further be displayed by means of the user interface 28, step 54.

Similarly, step 55, by means of a second system of mathematical/geometric relationships, which is also not described in detail, a second defect index can be calculated, in the example a squaring error in the plane yz.

This second defect index can further be displayed by means of the user interface 28, step 56.

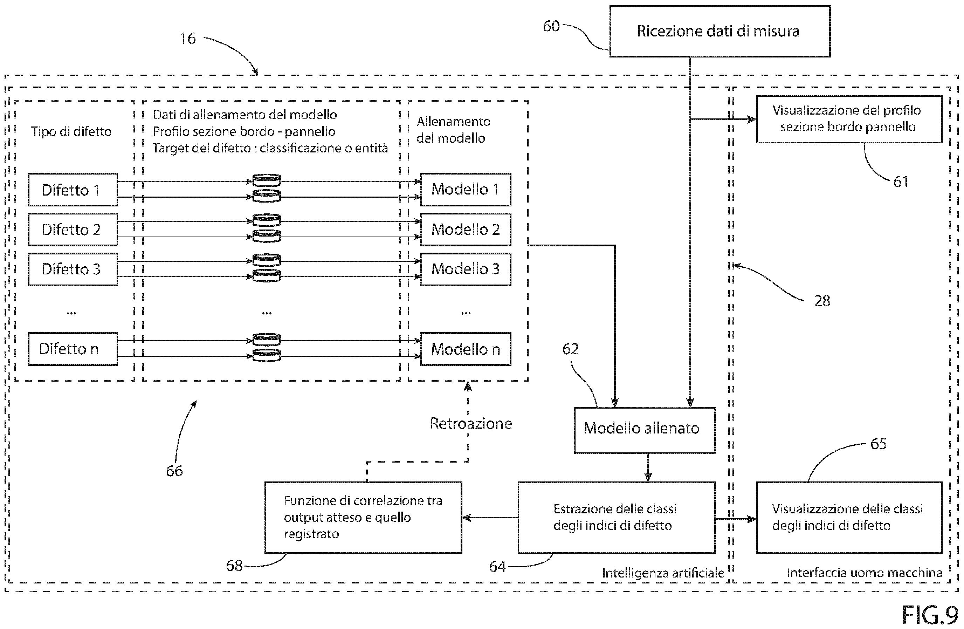

Similarly, with reference to Figure 9, a possible algorithm based on artificial intelligence, which can be implemented by the aforementioned stage for calculating the defect indicators, is briefly described.

This algorithm can entail, similarly to what discussed above, receiving the measurement data, here shown at step 60, in particular the aforementioned profile of the section of the edge-panel system 14; this profile can also be displayed by the control unit 16 through the corresponding user interface 28, as shown in step 61.

In this case, the algorithm then proceeds with the application of a trained artificial intelligence model, step 62, capable of extracting, step 64, classes of the defect indices of the profile of the section of the edge-panel system 14, in particular for the determination of the aforementioned defect indices, which can be displayed by means of the aforementioned user interface 28, step 65.

As shown in Figure 9, the procedure entails a training step, denoted with 66, for training the artificial intelligence model, not only based on training data, but also based on the results of the measurements, by means of appropriate feedback, as indicated in step 68. For example, this feedback can be a function of a correlation between an expected output and an actually recorded output, for example in the form of a root of the mean squared error.

As schematically shown, the training step can entail the training of a plurality of artificial intelligence models, indicated with M₁...Mₙ, one for each one of the defect indices to be measured (for example a radius index, a squaring error index, etc.), which are properly trained by means of training data and of a comparison between the measurements and the expected target. This training may also require the operator to provide a classification of the identified defects and of the measured panel assessment indices, using the aforementioned user interface 28.

The advantages of the solution disclosed herein can be assumed in an evident manner from the description above.

In any case, it is underlined that the described solution provides an effective automated system for monitoring defects of an edge-panel system, based on a profile measurement, extracting the (dimensional, geometric) profile of a section of the edge-panel system, for the subsequent calculation of the defect indicators that characterise the measured profile.

Advantageously, these indices can be used to carry out various controls and actions, including, but not limited to:
activating feedback operations towards the processing machine tool, thanks to which the same machine tool can redefine and optimise the processing parameters in order to reduce processing errors and processing waste and/or non-compliant products;
activating feedback operations towards the machine tool, thanks to which the latter can suggest ordinary or extraordinary maintenance solutions;
assessing the quality of the semi-finished products used, including edge, panel, glue, etc., with indications, for example, on the quality of the edge, on the quality of the panel and similar.

The system also advantageously provides feedback to an operator through a human-machine interface, which can, for example, indicate if minimum test conditions are respected, for example if the object under analysis is positioned and oriented correctly with respect to the measuring device and is placed at the right distance; the measurement can advantageously be carried out only if the previous feedback has given a positive result (for example, only if the object under analysis has been positioned and oriented correctly with respect to the measuring device and is placed at the right distance).

The system also allows measurement to be carried out on different materials and also with different colours, transparency, texture, dimensions, etc., being able to automatically adjust the parameters of the system, for example by means of the aforementioned operation of reading of a barcode (or similar identification code) applied on the panel.

The integration of the measuring device, of the control unit and of the processing machine tool in an IoT network is also advantageous.

Finally, it is clear that the solution described above can be subject to changes and variations, without departing from the scope of the invention defined in the appended claims.

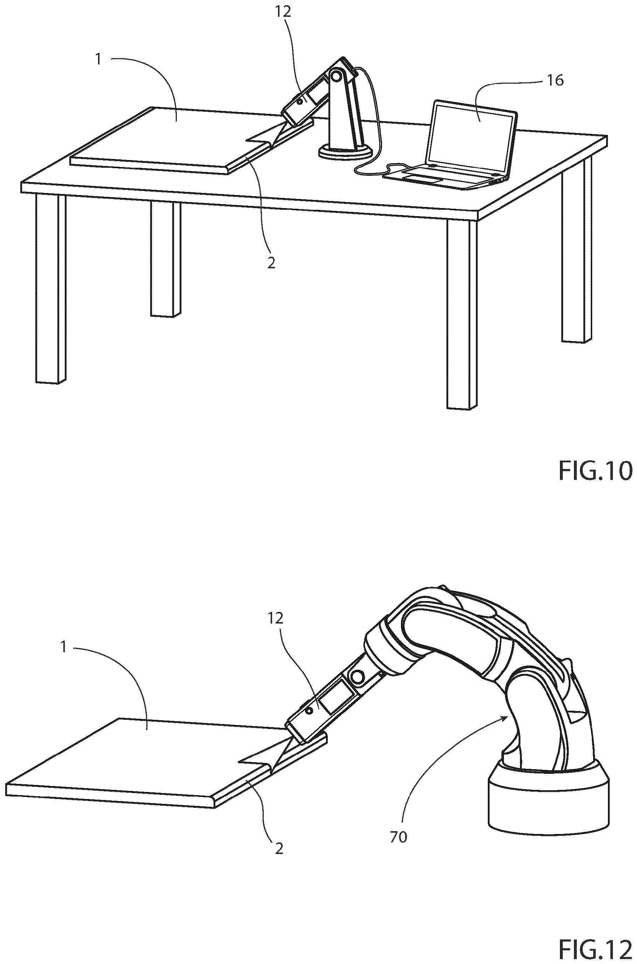

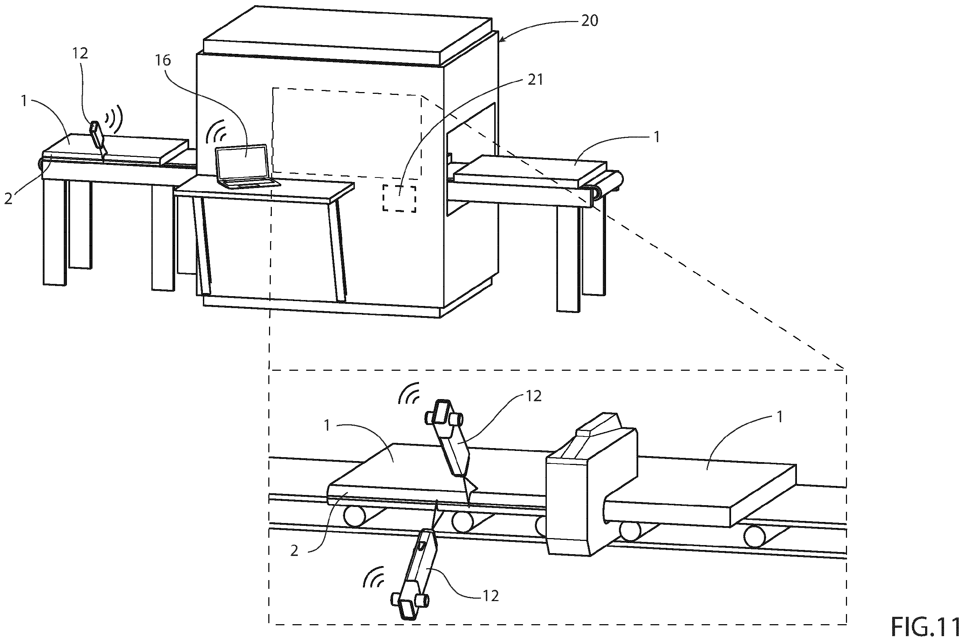

In particular, according to further embodiments, the measuring device 12 could be fixed (non-portable) and external to the machine tool 20, as schematically shown in Figure 10; or it could be integrated in the machine tool 20, downstream and/or upstream of the corresponding processing units used for the panel 1, as schematically shown in Figure 11; or still it could be moved by a robot 70 or a similar automated actuator element, as schematically shown in Figure 12.

Advantageously, in case of integration of the measuring device 12 of the monitoring system 10 in the machine tool 20, the defect monitoring operations could also be performed in real time, during processing of the panels 1 by the machine tool 20.

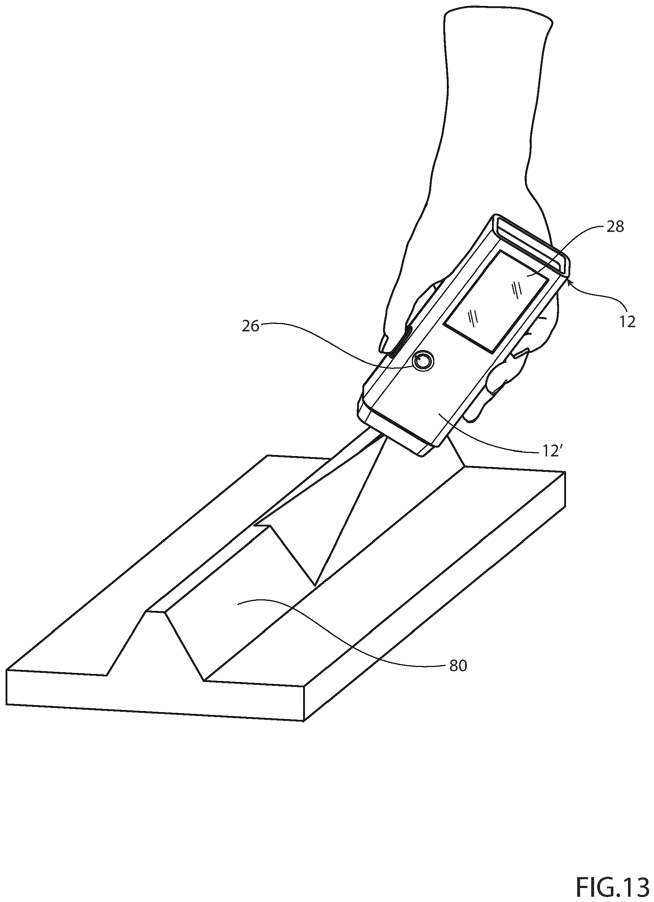

Moreover, a further aspect of this solution can entail the use of a reference sample 80, having a precisely known profile, by way of example shown in Figure 13, which allows periodic checks to be carried out on the correspondence of the measured data with expectations. The use of this reference sample 80 allows to avoid drifts of the measuring instrument between one calibration and the next one. The result of the performed check can be viewed through the user interface 28 or the control unit 16.

Finally, it is again underlined that the described solution can be applied for the determination of any other index or indicator of defects of the edge-panel system 14, also different from what has been described above by way of example.

## Claims

1. A system (10) for monitoring defects of edges (2) of panels (1) obtained by industrial processing by means of a machine tool (20), comprising:
a measuring device (12), configured to perform dimensional measurements of an edge-panel system (14), formed by a panel (1) on which an edge (2) has been applied to close a lateral surface thereof;
a control unit (16), operatively coupled to the measuring device (12) and configured to receive dimensional measurement data from the measuring device (12) and to process said dimensional measurement data to determine information concerning defects associated with said edge-panel system (14);
wherein said control unit (16) is configured to provide the processed information concerning the defects associated with said edge-panel system (14) to said machine tool (20), in order to optimize, based on said information, processing parameters of the panels (1) and of the respective edges (2) and thus reduce processing errors.

2. The system according to claim 1, wherein said control unit (16) is configured to provide the processed information concerning the defects associated with said edge-panel system (14) to said machine tool (20), in order to determine, based on said information, ordinary or extraordinary maintenance solutions for said machine tool (20) .

3. The system according to claim 1 or 2, wherein said control unit (16) is configured to carry out, based on said information, assessments regarding the quality of used semi-finished products, comprising one or more of: the edge (2), the panel (1), a glue used for coupling between said edge (2) and panel (1).

4. The system according to any one of the preceding claims, wherein said control unit (16) is configured to determine said information concerning the defects associated with said edge-panel system (14), by implementing artificial intelligence techniques.

5. The system according to any one of the preceding claims, wherein said measuring device (12) is configured to perform a detection of a three-dimensional pattern of a surface of said edge-panel system (14) for generating said dimensional measurement data.

6. The system according to any one of the preceding claims, wherein said measuring device (12) is configured to perform a profile measurement, for detecting a profile of a section of said edge-panel system (14).

7. The system according to any one of the preceding claims, wherein said measuring device (12) is of a portable type, being operable by a user to perform said measurements.

8. The system according to any one of the preceding claims, wherein said measuring device (12) is configured to: verify the presence of, and compliance with, predetermined measurement conditions, relating to a correct positioning with respect to said edge-panel system (14); and determining activation of the measurement functions and subsequent provision of the measurement data to said machine tool (20) only if compliance with said measurement conditions is determined.

9. The system according to claim 8, wherein said measuring device (12) is provided with a user interface (28), with input elements and a display, configured to provide an indication as to whether said measurement conditions are respected.

10. The system according to any one of the preceding claims, wherein said measuring device (12) is provided with an identification code reader, to read an identification code applied on the edge-panel system (14) and automatically acquire characteristics of the panel (2) and/or of said machine tool (20), encoded in said identification code; wherein said control unit (16) is configured to determine said information concerning the defects associated with said edge-panel system (14) also as a function of said characteristics.

11. The system according to any one of the preceding claims, wherein said control unit (16) is configured to determine defect indicators as a function of said dimensional measurement data.

12. The system according to claim 11, wherein said defect indicators are associated with one or more of: parallelism errors; linearity errors; radius errors; squaring errors; shaping errors; splintering; orange peel; slivers; thickness errors; heading errors; excess errors, associated with said edge-panel system (14).

13. The system according to any one of the preceding claims, wherein said control unit (16) is integrated within said measuring device (1).

14. The system according to any one of the preceding claims, wherein said control unit (16) is distinct and separate from said measuring device (12) and from said machine tool (20); said control unit (16) being coupled in wireless communication with said measuring device (12) and with a controller (21) of said machine tool (20).

15. The system according to any one of the preceding claims, wherein said control unit (16) comprises a respective human-machine interface, configured to display results of the processing performed, comprising one or more of: indicators describing the defects of the edge-panel system (14), maintenance requests for the machine tool (20), assessments regarding the quality of semi-finished products relating to said edge-panel system (14).

16. The system according to any one of the preceding claims, wherein said measuring device (12), said control unit (16) and said machine tool (20) are part of an IoT - Internet of Things - platform (22), suitable to implement two-way communication and storage of defect tracking information.

17. A machine tool (20), configured to process an edge-panel system (14) and configured to be operatively coupled to a monitoring system (10) according to any one of the preceding claims.

18. A method for monitoring defects of edges (2) of panels (1) obtained by industrial processing by means of a machine tool (20), comprising:
performing dimensional measurements of an edge-panel system (14), formed by a panel (1) on which an edge (2) has been applied to close a lateral surface thereof, in order to generate corresponding dimensional measurement data;
processing said dimensional measurement data to determine information concerning defects associated with said edge-panel system (14);
providing the processed information concerning the defects associated with said edge-panel system (14) to said machine tool (20), in order to optimize, according to said information, processing parameters of the panels (1) and of the respective edges (2) and thus reduce processing errors.
